# DEMANDE DE BREVET EUROPEEN

(11) **EP 1 089 543 A1**
(43) Date de publication de la demande: **04.04.2001**
(21) Numéro de dépôt: 00402615.9
(22) Date de dépôt: 21.09.2000
(51) Int. Cl.: H04N 1/00

(54) **Télécopieur simplifié pour l'internet**

(30) Priorité: 29.09.1999 FR 9912134
(71) Demandeur: SAGEM S.A., 75116 Paris (FR)
(72) Inventeur: Brot, Michel, 95100 Argenteuil (FR)
(74) Mandataire: Bloch, Gérard

(57) **Abrégé**

Télécopieur agencé pour émettre des télécopies à travers un réseau téléphonique (100) et à travers un réseau informatique (101), comprenant un répertoire de correspondants (8), contenant des données d'identification d'une pluralité de télécopieurs correspondants, des moyens (4) de saisie de données d'identification d'un télécopieur et des moyens (41, 42) pour commander l'émission d'une télécopie. Le répertoire de correspondants (8) contient une adresse informatique pour chaque télécopieur correspondant du réseau informatique (101), et il est prévu des moyens automates (10) de sélection de réseau, agencés pour, après la saisie de données d'identification d'un télécopieur destinataire et l'activation des moyens de commande d'émission, rechercher lesdites données d'identification dans le répertoire (8) et, dans le cas où celui-ci contient une adresse informatique pour le télécopieur destinataire, commander l'émission de la télécopie à travers le réseau informatique (101), vers ladite adresse informatique.

## Description

L'invention concerne un télécopieur agencé pour émettre des télécopies à travers un réseau téléphonique et à travers un réseau informatique, par exemple l'Internet.

Pour émettre une télécopie à travers le réseau téléphonique, il suffit généralement de saisir le numéro d'appel téléphonique du destinataire et d'appuyer sur une touche d'émission. En revanche, pour émettre une télécopie à travers l'Internet, il faut préparer un message électronique, y insérer la télécopie, connecter le télécopieur à l'Internet, par connexion téléphonique à un fournisseur d'accès, et enfin envoyer le message électronique à travers l'Internet. En définitive, on exécute les mêmes opérations que celles nécessaires pour émettre un fichier de données, qui peut en particulier être un fichier de données de télécopie, en pièce jointe d'un courrier électronique, à travers l'Internet, à partir d'un ordinateur ayant des capacités Internet. En outre, il convient au préalable de rechercher si le correspondant a des capacités Internet et récupérer, le cas échéant, son adresse informatique de messagerie électronique.

Bref, les manipulations sont différentes selon que l'on utilise l'Internet ou le réseau téléphonique pour émettre une télécopie. De plus, il est plus compliqué d'émettre une télécopie à travers l'Internet qu'à travers le réseau téléphonique. Il en résulte que les utilisateurs de tels télécopieurs sont souvent réticents à utiliser l'Internet. Or, le coût des communications à travers l'Internet, et plus généralement à travers tout réseau informatique de ce type, est très avantageux, surtout pour les communications à longue distance.

La présente invention vise à pallier ces inconvénients.

A cet effet, l'invention concerne un télécopieur agencé pour émettre des télécopies à travers un réseau téléphonique et à travers un réseau informatique, comprenant un répertoire de correspondants, contenant des données d'identification d'une pluralité de télécopieurs correspondants et, pour chaque télécopieur correspondant du réseau informatique, une adresse informatique, des moyens de saisie de données d'identification d'un télécopieur et des moyens pour commander l'émission d'une télécopie, caractérisé par le fait qu'il comprend des moyens automates de sélection de réseau, agencés pour
- après la saisie de données d'identification d'un télécopieur destinataire et l'activation des moyens de commande d'émission, rechercher lesdites données d'identification dans le répertoire,
- dans le cas où le répertoire contient une adresse informatique pour le télécopieur destinataire, commander l'émission de la télécopie à travers le réseau informatique, vers ladite adresse informatique, et
- dans le cas où le répertoire ne contient pas d'adresse informatique pour le télécopieur destinataire, commander l'émission de la télécopie, avec le numéro d'appel téléphonique du télécopieur destinataire, à travers le réseau informatique, vers un serveur passerelle entre les réseaux informatique et téléphonique, destiné à retransmettre la télécopie, vers le télécopieur destinataire, à travers le réseau téléphonique.

Ainsi, si l'adresse informatique du télécopieur destinataire est répertoriée dans le télécopieur de l'invention, celui-ci sélectionne le réseau informatique pour émettre la télécopie, de façon automatique, à l'aide des moyens automates de sélection de réseau, sans l'intervention de l'utilisateur.

Si le répertoire ne contient pas d'adresse informatique pour le télécopieur destinataire, la télécopie transite par le réseau informatique, par l'intermédiaire d'un serveur passerelle. Grâce à cela, on optimise le coût des communications. On notera qu'il en est ainsi non seulement dans le cas où le télécopieur destinataire est enregistré dans le répertoire mais n'y a pas d'adresse informatique, mais également dans le cas où il n'est pas dans le répertoire.

De préférence, les moyens automates sont agencés pour commander l'émission de la télécopie vers le serveur passerelle, à travers le réseau informatique, seulement si le répertoire contient un numéro d'appel téléphonique international du télécopieur destinataire et, sinon, vers le télécopieur destinataire, à travers le réseau téléphonique.

Dans une forme de réalisation particulière, les moyens de commande d'émission comprennent une touche d'émission, destinée à commander l'émission d'une télécopie soit à travers le réseau informatique, vers l'adresse informatique du télécopieur destinataire, soit à travers le réseau téléphonique, vers le numéro d'appel téléphonique du télécopieur destinataire, selon que le répertoire contient ou non une adresse informatique pour le télécopieur destinataire.

De préférence encore, les moyens de commande d'émission comprennent une touche d'émission, destinée à commander l'émission de la télécopie soit à travers le réseau informatique, vers l'adresse informatique du télécopieur destinataire, si le répertoire contient une adresse informatique pour ledit télécopieur destinataire, ou vers le serveur passerelle, si le répertoire contient, dans un champ spécifique, un numéro d'appel téléphonique international pour ledit télécopieur destinataire, soit à travers le réseau téléphonique, si le répertoire ne contient ni adresse informatique, ni numéro d'appel téléphonique international, dans ledit champ, pour le télécopieur destinataire.

L'invention sera mieux comprise à l'aide de la description suivante d'une forme de réalisation particulière du télécopieur de l'invention, en référence au dessin annexé sur lequel:

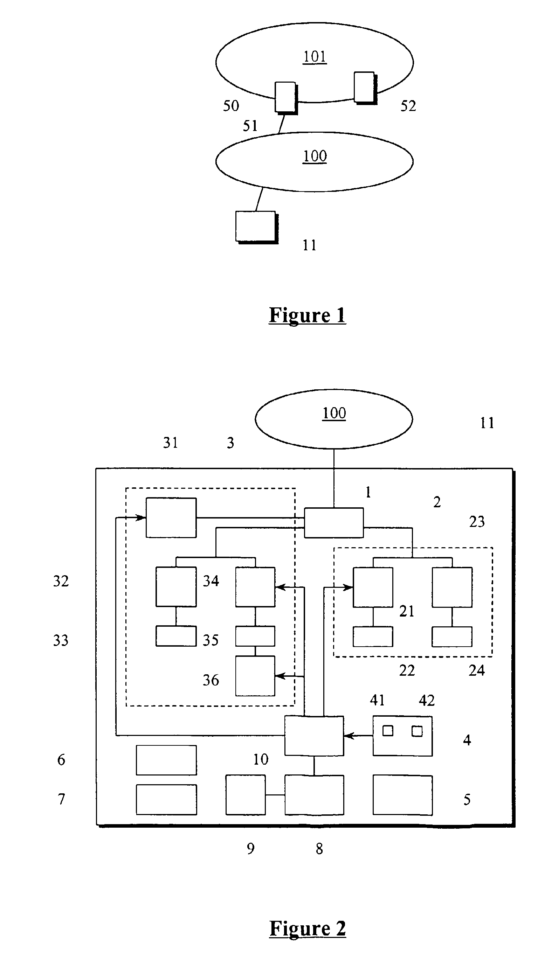

- la figure 1 représente un schéma du télécopieur de l'invention relié à l'Internet et à un réseau téléphonique et
- la figure 2 représente un schéma bloc fonctionnel du télécopieur de l'invention, selon la forme de réalisation particulière.

Le télécopieur 11 de l'invention est agencé pour émettre et recevoir des télécopies à travers un réseau téléphonique 100, en l'espèce le réseau RTC (Réseau Téléphonique Commuté), et à travers un réseau informatique 101, ici l'Internet. Il dispose d'un accès à l'Internet 101 et d'un service de messagerie électronique, fournis par un serveur 50 de l'Internet 101. Le télécopieur 11 a en outre une adresse informatique de messagerie électronique sur l'Internet 101, ou "adresse Internet de messagerie", et une boîte à lettres 51, située dans le serveur 50, destinée à stocker provisoirement les messages reçus, adressés au télécopieur 11, jusqu'à leur téléchargement dans le télécopieur 11.

Le télécopieur 11 comprend un module 2 d'émission et de réception de télécopies à travers le réseau téléphonique 100, un module 3 d'émission et de réception de messages électroniques à travers l'Internet 101, une interface homme-machine, comportant un clavier de saisie 4 et un écran d'affichage 5, un bloc d'impression 6 et un bloc scanner 7.

Le clavier de saisie 4 comprend, outre les éléments ordinaires d'un clavier de télécopieur, deux touches d'émission de télécopie 41, 42, explicitées plus loin.

Le module 2 comprend un bloc 21 d'émission de télécopie, un bloc 23 de réception de télécopie, une mémoire 22 de stockage de télécopies en attente d'émission et une mémoire 24 de stockage de télécopies reçues. Les mémoires 22 et 24 sont respectivement reliées au bloc d'émission 21 et au bloc de réception 23.

Les blocs 21, 23, d'émission et de réception de télécopies, sont respectivement destinés à émettre et à recevoir des télécopies suivant un protocole de transmission de télécopie, en l'espèce le protocole T30.

Le module 3 comprend un bloc 31 de connexion à l'Internet 101, un bloc 34 d'émission de messages électroniques, un bloc 32 de réception de messages électroniques, un bloc 36 de préparation de messages électroniques, une mémoire 35 de messages électroniques en attente d'émission et une mémoire 33 de messages électroniques reçus.

Le bloc de connexion 31 est destiné à connecter le télécopieur 11 à l'Internet 101, par connexion téléphonique, à travers le réseau téléphonique 100, au serveur 50.

Le bloc d'émission 34 est destiné à émettre des messages électroniques à travers l'Internet 101, par l'intermédiaire du serveur 50. Le bloc de réception 32 est destiné à récupérer des messages reçus, stockés provisoirement dans la boîte à lettres 51, par téléchargement depuis serveur 50 dans le télécopieur 11.

Le bloc 36 de préparation de messages est destiné à préparer des messages électroniques, destinés à être transmis à travers l'Internet 101.

On rappelle ici qu'un message électronique comprend un en-tête, un corps de message et éventuellement une ou plusieurs pièces jointes. L'en-tête contient notamment un champ <TO>, destiné à contenir l'adresse Internet de messagerie du télécopieur émetteur, et un champ <FROM>, destiné à contenir l'adresse Internet de messagerie du télécopieur récepteur. Le corps du message est destiné à contenir le message proprement dit. Les pièces jointes peuvent comprendre des fichiers de données, de types (son, vidéo, graphique, etc.) et de formats (doc, jpeg, gif, tiff, etc.) très divers, et notamment des fichiers de données de télécopie, qui sont des fichiers de type graphique.

Pour l'émission d'une télécopie à travers l'Internet 101, le bloc 36 de préparation de messages est destiné à insérer la télécopie dans un message électronique, en pièce jointe.

Les blocs d'émission 34, 21, les blocs de réception 32, 23 et le bloc de connexion 31 sont reliés à une interface 1 de liaison au réseau téléphonique 100, comportant un modem.

Le télécopieur 11 comprend en outre une mémoire 8 de stockage d'un répertoire de correspondants, un bloc 9 de gestion du répertoire 8 et un automate 10 de sélection de réseau, pour l'émission d'une télécopie.

Le répertoire 8 répertorie une pluralité de télécopieurs correspondants. Pour chacun de ces télécopieurs, le répertoire 8 comprend les trois champs associés suivants: <nom>, <numéro d'appel téléphonique>, <adresse Internet de messagerie>.

Les champs <nom> et <numéro d'appel téléphonique> sont respectivement destinés à contenir un nom, identifiant le télécopieur considéré, et le numéro d'appel téléphonique de ce télécopieur, ces informations constituant des données d'identification du télécopieur. Le champ <adresse Internet de messagerie> est destiné à contenir l'adresse Internet de messagerie du télécopieur considéré ou, s'il n'a pas d'adresse Internet de messagerie, éventuellement son numéro d'appel téléphonique international.

Le bloc de gestion 9, relié au répertoire 8, permet à un utilisateur d'enregistrer un nouveau télécopieur, autrement dit de le répertorier, dans le répertoire 8, en renseignant les différents champs associés (<nom>, <numéro d'appel téléphonique>, <adresse Internet de messagerie>), de supprimer un télécopieur dans le répertoire 8, et de modifier les informations, contenues dans les champs associés, relatives à un télécopieur déjà répertorié. On notera que l'un des deux champs associés <numéro d'appel téléphonique> et <adresse Internet de messagerie>, d'un télécopieur du répertoire 8, peut ne pas être renseigné, c'est-à-dire être vide.

L'automate de sélection 10 est relié au répertoire 8, aux deux blocs d'émission 34, 21, au bloc de préparation de message 36 et au bloc de connexion Internet 31.

Pour émettre une télécopie, un utilisateur saisit le nom, ou le numéro d'appel téléphonique, du télécopieur destinataire, à l'aide du clavier de saisie 4, puis appuie sur l'une des deux touches d'émission 41, 42. L'automate de sélection 10 recherche alors dans le répertoire 8 le nom saisi, ou le numéro d'appel téléphonique saisi, sélectionne l'un des deux réseaux, Internet 101 et téléphonique 100, en fonction du contenu du répertoire 8, et commande l'émission de la télécopie à travers le réseau sélectionné. En cas de sélection de l'Internet 101, l'automate 10 commande l'émission de la télécopie à travers l'Internet 101, soit vers l'adresse Internet de messagerie du télécopieur destinataire, soit vers un serveur passerelle 52 entre l'Internet 101 et le réseau téléphonique 100, destiné à retransmettre la télécopie vers le télécopieur destinataire à travers le réseau téléphonique 100, selon que le champ <adresse Internet de messagerie> du télécopieur destinataire contient une adresse Internet de messagerie ou un numéro d'appel téléphonique international. Ces étapes seront explicitées plus précisément dans la description du fonctionnement du télécopieur 11.

La première touche d'émission 41 permet de commander l'émission d'une télécopie:
- soit à travers l'Internet 101, vers l'adresse informatique du télécopieur destinataire, si le répertoire 8 contient une adresse informatique pour le télécopieur destinataire;
- soit à travers le réseau téléphonique 100, vers le numéro d'appel téléphonique du télécopieur destinataire, si le répertoire 8 ne contient pas d'adresse informatique pour le télécopieur destinataire.

La seconde touche d'émission 42 permet de commander l'émission d'une télécopie:
- soit à travers l'Internet 101, vers l'adresse informatique du télécopieur destinataire, si le répertoire 8 contient une adresse informatique pour le télécopieur destinataire, ou vers le serveur passerelle 52, si le répertoire 8 contient un numéro d'appel téléphonique international dans le champ <adresse Internet de messagerie> du télécopieur destinataire,
- soit à travers le réseau téléphonique 100, si le répertoire 8 ne contient ni adresse informatique, ni numéro d'appel téléphonique international pour le télécopieur destinataire.

Le télécopieur 11 comprend également un bloc central de commande, en l'espèce un microprocesseur, non représenté, relié aux éléments décrits ci-dessus, et destiné à commander le fonctionnement du télécopieur 11.

Après la description structurelle et fonctionnelle du télécopieur 11, son fonctionnement va maintenant être décrit, pour l'émission d'une télécopie vers un télécopieur destinataire.

Pour émettre une télécopie, un utilisateur place le document de télécopie dans le télécopieur 11, saisit le nom, ou le numéro d'appel téléphonique, du télécopieur destinataire, à l'aide du clavier de saisie 4, et appuie sur l'une des deux touches d'émission 41, 42. Le document de télécopie est alors scanné par le bloc scanner 7. Par ailleurs, l'automate de sélection 10 recherche les données d'identification saisies (le nom ou le numéro d'appel téléphonique du télécopieur destinataire) dans le répertoire 8, sélectionne l'un des deux réseaux, Internet 101 et téléphonique 100, en fonction du contenu du répertoire 8, et commande l'émission de la télécopie à travers le réseau sélectionné. L'opération de sélection de réseau, effectuée par l'automate 10, va maintenant être explicitée, dans le cas 1) où l'utilisateur appuie sur la première touche d'émission 41, et dans le cas 2) où l'utilisateur appuie sur la seconde touche d'émission 42.

### 1) Appui sur la première touche 41

Si le répertoire 8 contient le nom saisi, ou le numéro d'appel téléphonique saisi, du télécopieur destinataire et une adresse Internet de messagerie pour ce télécopieur, l'automate 10 sélectionne l'Internet 101 et commande l'émission de la télécopie, à travers l'Internet 101, vers l'adresse Internet de messagerie du télécopieur destinataire.

Si le répertoire 8 ne contient pas d'adresse Internet de messagerie pour le télécopieur destinataire, l'automate 10 sélectionne le réseau téléphonique 100 et commande l'émission de la télécopie à travers le réseau téléphonique 100, vers le numéro d'appel téléphonique du télécopieur destinataire, saisi par l'utilisateur ou extrait du répertoire 8 par l'automate 10. Il en est ainsi dans le cas où le télécopieur destinataire est répertorié dans le répertoire 8 mais n'y a pas d'adresse Internet de messagerie électronique enregistrée (le champ <adresse Internet de messagerie> étant vide ou contenant le numéro d'appel téléphonique international du télécopieur destinataire), ainsi que dans le cas où le télécopieur destinataire n'est pas répertorié dans le répertoire 8. Bien sûr, dans ce dernier cas, l'utilisateur doit obligatoirement saisir le numéro d'appel téléphonique du télécopieur destinataire.

### 2) Appui sur la seconde touche 42

Si le répertoire 8 contient le nom saisi, ou le numéro d'appel téléphonique saisi, du télécopieur destinataire et une adresse Internet de messagerie pour ce télécopieur, l'automate 10 sélectionne l'Internet 101 et commande l'émission de la télécopie, à travers l'Internet 101, vers l'adresse Internet de messagerie du télécopieur destinataire.

Si le répertoire 8 contient le nom saisi, ou le numéro d'appel téléphonique saisi, du télécopieur destinataire, et, dans le champ <adresse Internet de messagerie>, le numéro d'appel téléphonique international de ce télécopieur, l'automate 10 sélectionne l'Internet 101 et commande l'émission de la télécopie, avec le numéro d'appel téléphonique du télécopieur destinataire, à travers l'Internet 101, vers le serveur passerelle 52.

Si le répertoire 8 ne contient ni adresse Internet de messagerie, ni numéro de téléphone international dans le champ <adresse Internet de messagerie>, pour le télécopieur destinataire, l'automate 10 sélectionne le réseau téléphonique 100 et commande l'émission de la télécopie, à travers le réseau téléphonique 100, vers le numéro d'appel téléphonique du télécopieur destinataire. Il en est ainsi dans le cas où le télécopieur destinataire est répertorié dans le répertoire 8 mais avec un champ <adresse Internet de messagerie> vide et un champ <numéro d'appel téléphonique> contenant un numéro d'appel téléphonique, éventuellement international, ainsi que dans le cas où le télécopieur destinataire n'est répertorié pas dans le répertoire 8. Dans ce dernier cas, l'utilisateur doit évidemment saisir le numéro d'appel téléphonique du télécopieur destinataire.

L'automate 10 ayant sélectionné l'un des deux réseaux, la télécopie est émise à travers le réseau sélectionné, comme. Les étapes, décrites ci-après dans les trois cas envisagés, visant à l'émission de la télécopie, sont exécutées sous la commande de l'automate 10.

### 1) Emission de la télécopie, à travers l'Internet, vers l'adresse Internet de messagerie du télécopieur destinataire

Le bloc 36 de préparation de messages prépare un message contenant, dans le champ <FROM>, l'adresse Internet de messagerie du télécopieur 11, préenregistrée, dans le champ <TO>, l'adresse Internet de messagerie du télécopieur destinataire, extraite du répertoire 8, et, en pièce jointe, la télécopie scannée à émettre, sous la forme d'un fichier de données. Le message est ensuite stocké provisoirement dans la mémoire 35.

D'autre part, le bloc de connexion 31 connecte le télécopieur 11 à l'Internet 101, par connexion téléphonique à travers le réseau téléphonique 100 au serveur 50.

Après connexion du télécopieur 11 à l'Internet 101, le bloc d'émission 34 émet à travers l'Internet 101, par l'intermédiaire du serveur 50, le message provisoirement stocké dans la mémoire 35. Le message est acheminé par l'Internet 101 jusqu'à l'adresse Internet de messagerie du télécopieur destinataire.

### 2) Emission de la télécopie, à travers l'Internet, par l'intermédiaire du serveur passerelle

Le bloc 36 de préparation de messages prépare un message contenant, dans le champ <FROM>, l'adresse Internet de messagerie du télécopieur 11 préenregistrée, dans le champ <TO>, l'adresse Internet de messagerie du serveur passerelle 52, également préenregistrée, dans le corps du message, le numéro d'appel téléphonique international du télécopieur destinataire, extrait du répertoire 8, et, en pièce jointe, la télécopie à émettre, sous la forme d'un fichier de données. Le message est ensuite provisoirement stocké dans la mémoire 35.

D'autre part, le bloc de connexion 31 connecte le télécopieur 11 à l'Internet 101, comme précédemment décrit.

Après connexion du télécopieur 11 à l'Internet 101, le bloc d'émission 34 émet le message à travers l'Internet 101, par l'intermédiaire du serveur 50. Le message est acheminé à travers l'Internet 101 jusqu'au serveur passerelle 52. Après réception du message, le serveur passerelle 52 en extrait la télécopie et le numéro d'appel téléphonique du télécopieur destinataire puis, si nécessaire après avoir converti le format de la télécopie, retransmet la télécopie à travers le réseau téléphonique 100, vers le numéro d'appel téléphonique du télécopieur destinataire, suivant un protocole de transmission de télécopie.

### 3) Emission de la télécopie, à travers le réseau téléphonique, vers le numéro d'appel téléphonique du télécopieur destinataire

Dans ce cas, la télécopie scannée est provisoirement stockée dans la mémoire 22 jusqu'à son émission, par le bloc d'émission 21, à travers le réseau téléphonique 100.

La seconde touche d'émission 42 pourrait commander l'émission de la télécopie à travers l'Internet 101, vers le serveur passerelle 52, dans le cas où le télécopieur destinataire n'a pas d'adresse Internet de messagerie, enregistrée dans le répertoire 8, mais a un numéro d'appel téléphonique international, enregistré dans le champ <numéro d'appel téléphonique>.

Le télécopieur pourrait également ne comprendre qu'une seule touche d'émission de télécopie, destinée à commander l'émission d'une télécopie:
- soit vers l'adresse Internet de messagerie du télécopieur destinataire, à travers l'Internet 101, si le champ <adresse Internet de messagerie> du télécopieur destinataire contient cette adresse;
- soit vers le serveur passerelle 52, à travers l'Internet 101, si le champ <adresse Internet de messagerie> du télécopieur destinataire contient le numéro d'appel téléphonique international du télécopieur destinataire;
- soit vers le numéro d'appel téléphonique du télécopieur destinataire, à travers le réseau téléphonique 100, si le champ <adresse Internet de messagerie> du télécopieur destinataire est vide.

En variante, l'unique touche d'émission pourrait commander l'émission de la télécopie vers le serveur passerelle 52 si, le champ <adresse Internet de messagerie> ne contenant pas d'adresse Internet de messagerie, le champ <numéro d'appel téléphonique> du télécopieur destinataire contient un numéro d'appel téléphonique international.

On pourrait encore envisager que la touche d'émission commande l'émission de la télécopie à travers l'Internet 101, vers le serveur passerelle 52, dans tous les cas où le télécopieur destinataire n'a pas d'adresse informatique enregistrée dans le répertoire.

En cas d'émission de la télécopie et du numéro d'appel téléphonique du télécopieur destinataire vers le serveur passerelle 52, on pourrait insérer le numéro d'appel téléphonique dans un champ de l'en-tête du message, par exemple dans un champ <objet>, au lieu de l'insérer dans le corps du message.

Au lieu d'être relié au réseau RTC, le télécopieur pourrait être relié à tout autre réseau téléphonique, comme par exemple à un réseau RNIS (Réseau Numérique à Intégration de Services).

## Revendications

1. Télécopieur agencé pour émettre des télécopies à travers un réseau téléphonique (100) et à travers un réseau informatique (101), comprenant un répertoire de correspondants (8), contenant des données d'identification d'une pluralité de télécopieurs correspondants et, pour chaque télécopieur correspondant du réseau informatique (101), une adresse informatique, des moyens (4) de saisie de données d'identification d'un télécopieur et des moyens (41, 42) pour commander l'émission d'une télécopie, caractérisé par le fait qu'il comprend des moyens automates (10) de sélection de réseau, agencés pour
- après la saisie de données d'identification d'un télécopieur destinataire et l'activation des moyens de commande d'émission, rechercher lesdites données d'identification dans le répertoire (8),
- dans le cas où le répertoire (8) contient une adresse informatique pour le télécopieur destinataire, commander l'émission de la télécopie à travers le réseau informatique (101), vers ladite adresse informatique, et
- dans le cas où le répertoire (8) ne contient pas d'adresse informatique pour le télécopieur destinataire, commander l'émission de la télécopie, avec le numéro d'appel téléphonique du télécopieur destinataire, à travers le réseau informatique (101), vers un serveur passerelle (52) entre les réseaux informatique (101) et téléphonique (100), destiné à retransmettre la télécopie, vers le télécopieur destinataire, à travers le réseau téléphonique (100).

2. Télécopieur selon la revendication 1, dans lequel les moyens automates (10) sont agencés pour commander l'émission de la télécopie vers le serveur passerelle (52), à travers le réseau informatique (101), seulement si le répertoire (8) contient un numéro d'appel téléphonique international pour le télécopieur destinataire et, sinon, vers le télécopieur destinataire, à travers le réseau téléphonique (100).

3. Télécopieur selon la revendication 1, dans lequel, le répertoire (8) contenant, pour chaque télécopieur correspondant, un champ d'adresse informatique de ce télécopieur, les moyens automates sont agencés pour commander l'émission de la télécopie vers le serveur passerelle (52), à travers le réseau informatique (101), seulement si, dans le répertoire (8), le champ d'adresse informatique du télécopieur destinataire contient un numéro d'appel téléphonique international et, sinon, vers le télécopieur destinataire, à travers le réseau téléphonique (100).

4. Télécopieur selon l'une des revendications 1 à 3, dans lequel les moyens de commande d'émission comprennent une touche d'émission (41), destinée à commander l'émission d'une télécopie soit à travers le réseau informatique (11), vers l'adresse informatique du télécopieur destinataire, soit à travers le réseau téléphonique (100), vers le numéro d'appel téléphonique du télécopieur destinataire, selon que le répertoire (8) contient ou non une adresse informatique pour le télécopieur destinataire.

5. Télécopieur selon l'une des revendications 1 à 4, dans lequel les moyens de commande d'émission comprennent une touche d'émission (42), destinée à commander l'émission de la télécopie soit à travers le réseau informatique (101), vers l'adresse informatique du télécopieur destinataire, si le répertoire (8) contient une adresse informatique pour ledit télécopieur destinataire, ou vers le serveur passerelle (52), si le répertoire (8) contient, dans un champ spécifique, un numéro d'appel téléphonique international pour ledit télécopieur destinataire, soit à travers le réseau téléphonique (100), si le répertoire (8) ne contient ni adresse informatique, ni numéro d'appel téléphonique international, dans ledit champ, pour le télécopieur destinataire.
